# EUROPÄISCHE PATENTANMELDUNG

(11) **EP 4 544 905 A1**
(43) Veröffentlichungstag der Anmeldung: **30.04.2025**
(21) Anmeldenummer: 24195669.7
(22) Anmeldetag: 21.08.2024
(51) Int. Cl.: A01J 25/13

(54) **KÜHLFORMEINHEIT UND KÜHLEINRICHTUNG**

(30) Priorität: 27.10.2023 DE 102023129693
(71) Anmelder: ALPMA Alpenland Maschinenbau GmbH, 83543 Rott am Inn (DE)
(72) Erfinder: Baudino, Livio, 12084 Mondovi (IT); Panero, Enrico, 12011 Borgo San Dalmazzo (IT); Bähler, Balz, 8357 Guntershausen (CH)
(74) Vertreter: Manitz Finsterwald Patent- und Rechtsanwaltspartnerschaft mbB

(57) **Zusammenfassung**

Die Erfindung betrifft eine Kühlformeinheit zum Kühlen von Käseformlingen mittels einer Kühlflüssigkeit, insbesondere Wasser. Sie umfasst zumindest eine mit Käsemasse befüllbare Kühlform, insbesondere rohrförmige Kühlform, mit - in Gebrauchslage - einer stirnseitigen oberen Öffnung und mit einer stirnseitigen unteren Öffnung, zumindest eine Wanne mit zumindest einer Durchführung zur Aufnahme der Kühlform und ein mit einem unteren Ende der Kühlform verbundenes Basiselement, insbesondere eine Basisplatte, mit zumindest einer Aussparung, die der unteren Öffnung zugeordnet ist und durch die die untere Öffnung zugänglich ist. Die Kühlform ist in der Durchführung angeordnet, wobei die Durchführung derart dimensioniert ist, dass zwischen einem Rand der Durchführung und einer Außenwand der Kühlform ein zumindest abschnittsweise umlaufender Spalt gebildet ist. Die vorliegende Erfindung betrifft ferner eine Kühleinrichtung zum Kühlen von Käseformlingen mittels einer Kühlflüssigkeit.

## Beschreibung

Die Erfindung betrifft eine Kühlformeinheit, mit zumindest einer Kühlform, und eine Kühleinrichtung zum Kühlen von Käseformlingen mittels einer Kühlflüssigkeit.

Aus dem Stand der Technik sind verschiedene Anlagen zur maschinellen Herstellung von Käse bekannt. Je nach Käsesorte werden Rohstoffe in mehrstufigen Prozessen über Zwischenprodukte bis hin zu fertigen Käseprodukten verarbeitet.

Besonders anspruchsvoll ist die Herstellung von Pasta-Filata-Käse, wie etwa Mozzarella (einschließlich "low moisture Mozzarella"), Provolone oder Kashkaval/Kashar. Die Käse weisen in der Regel eine Trockenmasse von 45 % bis 60 %, bevorzugt 47 % bis 56 %, insbesondere aber 51 % bis 55 %, sowie einen auf die Trockenmasse bezogenen Fettgehalt von 30 % bis 55 %, bevorzugt 40 % bis 48 %, auf.

Bei der Produktion von Pasta-Filata-Käse wird Käsebruch in einem als Filieren bezeichneten Prozessschritt aufgeschmolzen, plastifiziert, gezogen und geknetet. Dadurch ergibt sich eine faserähnliche Struktur, die dem fertigen Käse schließlich die charakteristische Elastizität und Textur verleiht. Die beim Filieren erhaltene plastifizierte Käsemasse wird anschließend in einem weiteren Verfahrensschritt in die gewünschte Form gebracht und gekühlt.

Dazu wird die noch formbare Käsemasse in der Regel bei einer Temperatur von 55 °C bis 65 °C, zumeist 58 °C bis 63 °C, in eine Kühlform eingebracht und dann abgekühlt. Die eingeformte Käsemasse wird als Käseformling bezeichnet. Durch das Abkühlen härtet der Käseformling soweit aus, dass eine Weiterverarbeitung erfolgen kann. Das Ausbringen des gehärteten Käseformlings erfolgt anschließend beim sogenannten Ausformen.

Bisher erfolgte die Kühlung von Käseformlingen mittels Bädern, in denen Kühlformen zur Kühlung in Wasser oder Salzwasser gelagert werden, mittels Düsen, durch die Wasser direkt auf Kühlformen gesprüht wird, oder auch durch hohle und von Kühlwasser durchströmte Kühlformblöcke, die Aussparungen für Käseformlinge aufweisen. Zudem ist die Kühlung mit Düsen und Kühlformblöcken mit sogenannten Kühlformkarussellen bekannt.

Nachteilig bei diesen herkömmlichen Kühlformeinheiten ist, dass sie nicht sehr flexibel einzusetzen und aufwändig zu reinigen sind. Zudem werden erhebliche Mengen an Kühlflüssigkeit benötigt, um die gewünschte Kühlung zu erreichen. In vielen Fällen kann auch ein Kontakt zwischen der Kühlflüssigkeit und dem Produkt nicht vermieden werden. Aus Gründen der Lebensmittelhygiene muss die Kühlflüssigkeit dann häufig ausgetauscht oder gereinigt werden.

Die Aufgabe der Erfindung ist es, eine verbesserte Kühlformeinheit zu schaffen, mit der die oben genannten Nachteile vermieden werden.

Die Lösung der Aufgabe erfolgt durch die Merkmale des Anspruchs 1.

Eine erfindungsgemäße Kühlformeinheit umfasst zumindest eine mit Käsemasse befüllbare Kühlform mit einer stirnseitigen oberen Öffnung - also einer Öffnung, die in Gebrauchslage an einem oberen Ende der Kühlform angeordnet ist - und mit einer stirnseitigen unteren Öffnung - also einer Öffnung, die in Gebrauchslage an einem unteren Ende der Kühlform angeordnet ist -, zumindest eine Wanne mit zumindest einer Durchführung zur Aufnahme der Kühlform und ein mit dem unteren Ende der Kühlform verbundenes Basiselement mit zumindest einer Aussparung, die der unteren Öffnung zugeordnet ist und durch die die untere Öffnung zugänglich ist. Die Kühlform ist in der Durchführung angeordnet und die Durchführung ist derart dimensioniert, dass zwischen einem Rand der Durchführung und einer Außenwand der Kühlform ein zumindest abschnittsweise umlaufender Spalt gebildet ist. Insbesondere ist der Spalt im Wesentlichen (d.h. bis auf punktuelle Kontakte oder kurze Kontaktabschnitte zwischen der Kühlform und der Wanne) vollständig umlaufend. Die Kontaktpunkte oder -abschnitte können beispielsweise weniger als 10 %, bevorzugt weniger als 5 %, des Umfangs der Kühlform ausmachen.

Zur Kühlung der Kühlformeinheit wird diese mit Kühlflüssigkeit - in der Regel Wasser - beaufschlagt, sodass zumindest ein Teil der Kühlflüssigkeit, insbesondere die gesamte Kühlflüssigkeit in die Wanne der Kühlformeinheit gelangt. Die in der Wanne gesammelte Kühlflüssigkeit fließt der Schwerkraft folgend durch den zumindest einen Spalt zwischen der Durchführung und der Kühlform hindurch und flächig an der Außenwand der Kühlform herunter, wodurch die Kühlform und somit der darin befindliche Käseformling ohne Kontakt mit der Kühlflüssigkeit gekühlt werden (Rieselfilmkühlung). Für eine effiziente Kühlung und aus Gründen der Lebensmittelhygiene kann die Kühlform - wie auch die anderen Komponenten der Einheit - aus einem gut wärmeleitenden und gleichzeitig korrosionsbeständigen und leicht zu reinigenden Material gefertigt sein, bevorzugt aus Edelstahl.

Ist der Spalt im Umfangsrichtung weitgehend durchgehend ausgebildet, kann auf einfache Weise sichergestellt werden, dass sich ein praktisch vollflächiger Flüssigkeitsfilm an der Außenseite der Kühlform ausbildet, der eine gute Kühlung bei vergleichsweise geringem Kühlmitteaufwand gewährleistet (Rieselfilmkühlung).

Die Zufuhr der Kühlflüssigkeit kann so ausgestaltet sein, dass sich in der Wanne stets ein gewisser Kühlflüssigkeitsfüllstand einstellt. Dadurch kann gewährleistet werden, dass an alle Spalte hinreichend viel Kühlflüssigkeit gelangt und alle Kühlformen im Wesentlichen gleichmäßig gekühlt werden. Die Wanne kann einen, insbesondere unterbrechungsfreien Rand ausweisen, der eine geeignete Höhe aufweist, so dass sich der gewünschte Füllstand einstellen kann. Die Wanne kann ein einstückiges Bauteil sein, welches beispielsweise aus einem Blechteil geformt ist.

Die erfindungsgemäße Bauweise der Kühlformeinheit ist konstruktiv einfach und lässt sich leicht reinigen. Durch die flächige Benetzung der Kühlformen wird eine effiziente Kühlung erreicht, die letztlich den Energieverbrauch der entsprechenden Kühleinrichtung, in der die Kühlformeinheit zum Einsatz gelangt, senkt.

Vorteilhafte Ausführungsformen der Erfindung sind auch in den abhängigen Ansprüchen, der Beschreibung und den Figuren gegeben.

Bei einigen Ausführungsformen der erfindungsgemäßen Kühlformeinheit ist im Spalt zwischen Kühlform und Wanne zumindest ein eine Spaltbreite vorgebender Abstandshalter vorgesehen, der lösbar und/oder fest an der Kühlform und/oder der Wanne angeordnet ist. Insbesondere kann der Abstandshalter einstückig mit der Kühlform und/oder der Wanne ausgebildet sein. Er kann auch ein separates Bauteil sein. Beispielsweise ist der Abstandshalter als Rippe oder Vorsprung ausgeführt. Der Abstandshalter stabilisiert die Kühlform in der Durchführung und stellt gleichzeitig die gewünschte Dimensionierung des Spalts sicher.

Der Abstandshalter kann sowohl fest mit der Wanne als auch fest mit der Kühlform verbunden sein. Bevorzugt ist er jedoch nur mit einer der beiden genannten Komponenten fest verbunden, so dass thermische Effekte aufgenommen werden können. Beispielsweise sind die Kühlformen nach ihrer Befüllung in der Regel deutlich wärmer als der Rest der Einheit, so dass sie während der Kühlung der Einheit stärker thermisch "schrumpfen" als die anderen Komponenten. Dadurch wird auch ein "Verziehen" der Kühlform vermieden, das sonst bei einem Wärmeeintrag bei der Fertigung der Kühlform auftreten könnte (z.B. Schweißprozess).

Gemäß einer Ausführungsform der Kühlformeinheit sind mehrere Abstandshalter vorgesehen, die in Umfangsrichtung des Spaltes verteilt angeordnet sind. Insbesondere sind die Abstandshalter regelmäßig verteilt, um eine Kühlung am gesamten Umfang der Kühlform zu gewährleisten.

Bei einigen Ausführungsformen der Kühlformeinheit weist der Spalt eine Spaltbreite von 0,4 mm bis 1,2 mm auf. Bevorzugt beträgt die Spaltbreite 0,5 mm bis 1 mm, insbesondere 0,7 mm bis 0,9 mm.

Insbesondere ist eine Breite des Spalts im Wesentlichen konstant (bis auf punktuelle Kontakte oder kurze Kontaktabschnitte zwischen der Kühlform und der Wanne). Dadurch ist die durch den Spalt hindurchtretende Kühlflüssigkeitsmenge entlang des Spalts im Wesentlich überall gleich, wodurch eine gleichmäßige Kühlleistung erreicht wird.

Die Kühlform kann zumindest abschnittsweise einen polygonalen, kreisförmigen, quadratischen oder rechteckigen Querschnitt aufweisen.

Die Kühlform kann einen Kopfabschnitt umfassen, der die obere Öffnung aufweist und der zu der oberen Öffnung hin trichterförmig aufgeweitet ist. Die trichterförmige Aufweitung kann als Einführhilfe für einen in die Kühlform einzuführenden Stempel dienen.

Eine Innenseite der Kühlform kann zumindest abschnittsweise, insbesondere vollständig mit einer Beschichtung versehen sein. Die Beschichtung dient zur Verringerung einer Haftung zwischen der Käsemasse und der Kühlform. Dies ist sowohl beim Befüllen ("laminare Einformung") als auch beim Ausformen von Vorteil. Eine geringere Haftreibung ermöglicht es, die zur Ausformung erforderliche Kraft zu reduzieren. Außerdem wird die Gefahr verringert, dass die Oberfläche des Käses beim Ausformen aufreißt. Die Beschichtung erleichtert zudem die Reinigung der Kühlform. Für die Beschichtung kommt beispielsweise ein Material wie PTFE in Betracht.

Bei einigen Ausführungsformen der Kühlformeinheit ist ein unterer Rand des Kopfabschnitts auf einer Höhe zwischen einem Boden der Wanne und einem oberen Rand der Wanne angeordnet. Alternativ oder zusätzlich kann vorgesehen sein, dass ein oberer Rand des Kopfabschnitts über den oberen Rand der Wanne hinaus ragt, um zu verhindern, dass, wenn die Wanne vollständig gefüllt ist, Kühlflüssigkeit von oben in die Kühlform fließt.

Die Kühlformeinheit kann eine Mehrzahl von Durchführungen und Kühlformen umfassen, die bevorzugt regelmäßig angeordnet sind, insbesondere in Form einer Matrix. Beispielsweise kann eine Kühlformeinheit 24 Kühlformen aufweisen, die in einer 3 mal 8 Matrix angeordnet sind.

Bei einigen Ausführungsformen der Kühlformeinheit ist eine mit Rollen oder Kufen versehene Ablageeinheit vorgesehen, insbesondere eine Platte, auf der das Basiselement lösbar anordbar ist. Mittels Rollen oder Kufen kann die Kühlformeinheit bei Bedarf verfahren werden. Die Ablageeinheit besteht insbesondere aus Kunststoff oder kann damit beschichtet sein, um die Gleitreibung bei einem Herausziehen der Ablageeinheit unter der Kühlformeinheit oder bei einem Heraufschieben der Kühlformeinheit auf die Ablageeinheit zu reduzieren.

Um die Stabilität der Einheit zu erhöhen und ihre Handhabung zu vereinfachen, können die Wanne und das Basiselement mittels zumindest eines Rahmenelements fest miteinander verbunden sein.

Gemäß einer weiteren Ausführungsform der Kühlformeinheit weist das Basiselement Ablauföffnungen auf, durch die die Kühlflüssigkeit über einen Rand des Basiselements ablaufen kann. Die Ablauföffnungen erlauben das kontrollierte Ablaufen der Kühlflüssigkeit, um diese beispielsweise zu sammeln und wiederzuverwenden.

Die vorliegende Erfindung betrifft ferner eine Kühleinrichtung zum Kühlen von Käseformlingen mittels einer Kühlflüssigkeit, insbesondere mittels Wasser. Die erfindungsgemäße Kühleinrichtung umfasst zumindest eine Kühlformeinheit, insbesondere eine Kühlformeinheit gemäß zumindest einer der vorstehend beschriebenen Ausführungsformen, die mit einer Käsemasse befüllbar ist, und zumindest eine geradlinige Kühlstrecke, entlang der die zumindest eine Kühlformeinheit verfahrbar ist, wobei die Kühlformeinheit entlang der Kühlstrecke zumindest abschnittsweise mit Kühlflüssigkeit beaufschlagbar ist.

Kühlstrecken, entlang derer die Kühlformeinheiten geradlinig verfahrbar und dabei mit Kühlflüssigkeit kühlbar sind, ermöglichen einen kontinuierlichen und effizienten Betrieb der Kühleinrichtung bei einer optimalen Raumausnutzung. Derartige Kühleinrichtungen sind auch auf einfache Weise skalierbar. Es können beispielsweise bei Bedarf zwei oder mehr Kühlstrecken nebeneinander angeordnet werden.

Bei einigen Ausführungsformen der Kühleinrichtung ist zumindest ein Rohr zum Beaufschlagen der Kühlformeinheit mit der Kühlflüssigkeit vorgesehen, das sich zumindest abschnittsweise entlang der Kühlstrecke erstreckt, insbesondere parallel versetzt zu einer Längsachse der Kühlstrecke.

Das Rohr kann oberhalb eines oberen Rands der Wanne der Kühlformeinheit angeordnet sein, insbesondere oberhalb der oberen Öffnung der Kühlformeinheit.

Es ist denkbar, dass beidseitig der Kühlstrecke jeweils zumindest ein Rohr vorgesehen ist, um die Kühlformeinheit noch gleichmäßiger mit Kühlflüssigkeit beaufschlagen zu können.

Das Rohr zur Beaufschlagung der Kühlformeinheit mit Kühlflüssigkeit kann eine Mehrzahl von Löchern aufweisen, insbesondere wobei die Löcher regelmäßig angeordnet sind.

In einigen Ausführungsformen der Kühleinrichtung sind eine erste Gruppe und eine zweite Gruppe von Löchern vorgesehen, die unterschiedlich dimensioniert und/oder in Bezug auf eine Umfangsrichtung des Rohres in unterschiedlichen Winkellagen angeordnet sind. Bei Kühlformeinheiten der eingangs beschriebenen Art mit einer Matrixanordnung der Kühlformen kann die erste Gruppe von Löchern dazu vorgesehen sein, zwischen den Kühlformen Kühlflüssigkeit einzubringen. Die die zweite Gruppe von Löchern kann dazu dienen, Kühlflüssigkeit im Bereich der Kühlformen auf die Wanne zu spritzen und/oder die Kühlformen direkt zu beaufschlagen. Durch unterschiedliche Winkellagen kann die Beaufschlagung der Wanne mit Kühlflüssigkeit in verschiedenen Entfernungen von dem Rohr realisiert werden.

Bei einigen Ausführungsformen der Kühleinrichtung sind zumindest zwei in Längsrichtung der Kühlstrecke hintereinander angeordnete Kühlabschnitte vorgesehen, in denen die Kühlformeinheit unterschiedlich stark kühlbar ist, insbesondere mit Kühlflüssigkeit unterschiedlicher Temperatur. Die unterschiedliche Kühlung in den Bereichen ermöglicht es, den Kühlprozess bedarfsgerecht anzupassen und jeweils geeignete Kühlprofile zu realisieren. Beispielsweise kann in einem Abschnitt stärker gekühlt werden, wenn der Käseformling bereits eine weitgehend stabile Struktur aufweist.

Die Erfindung wird im Folgenden beispielhaft unter Bezugnahme auf die Figuren beschrieben. Es zeigen:
- Fig. 1: ein Ausführungsbeispiel einer erfindungsgemäßen Kühlformeinheit jeweils in perspektivischer Darstellung (a) von oben und (b) von unten,
- Fig. 2: den oben aus einer Durchführung der Wanne herausragenden Kopfabschnitt einer Kühlform in perspektivischer Darstellung,
- Fig. 3: schematisch eine Draufsicht auf eine Kühlform mit (a) rechteckigem Querschnitt und (b) kreisförmigem Querschnitt,
- Fig. 4a: ein Ausführungsbeispiel einer erfindungsgemäßen Kühlformeinheit mit einer Ablageeinheit in perspektivischer Darstellung,
- Fig. 4b: die Ablageeinheit der Fig 4a,
- Fig. 5: schematisch einen Ausschnitt einer erfindungsgemäßen Kühleinrichtung (a) in einer Seitenansicht und (b) in einer Draufsicht,
- Fig. 6: schematisch eine Draufsicht auf (a) eine und (b) drei Kühlstrecken einer erfindungsgemäßen Kühleinrichtung,
- Fig. 7: schematisch ein Ausführungsbeispiel einer Kühlanlage mit einer erfindungsgemäßen Kühleinrichtung in einer Draufsicht und
- Fig. 8: schematisch eine Seitenansicht eines Ausführungsbeispiels einer Einformeinrichtung mit einer erfindungsgemäßen Kühlformeinheit.

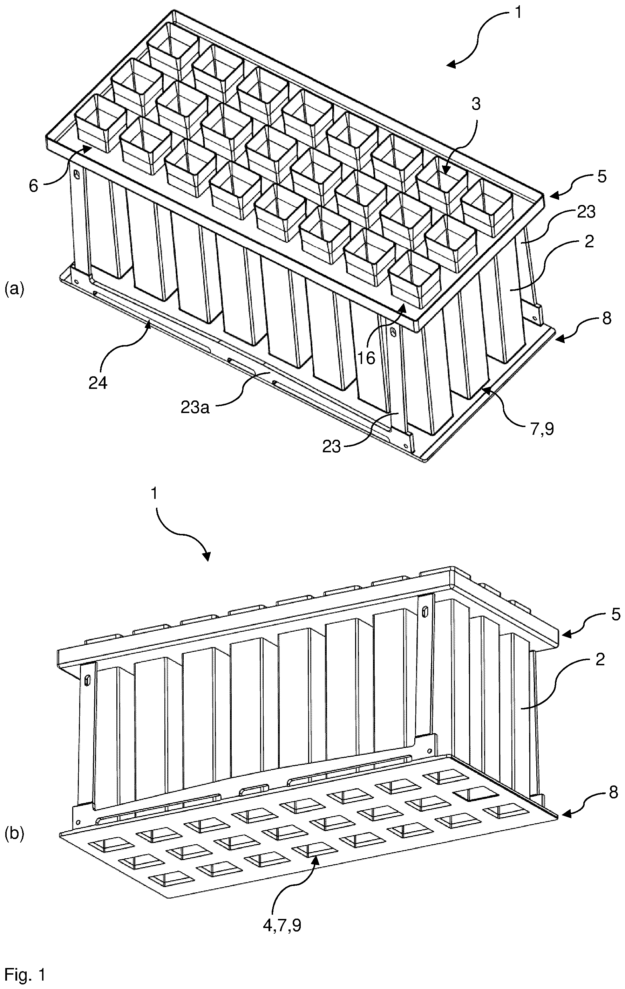

Fig. 1a zeigt eine Perspektivansicht einer Kühlformeinheit 1. Die Kühlformeinheit 1 umfasst eine Wanne 5 mit matrixartig angeordneten Durchführungen 6, in denen rohrförmige Kühlformen 2 angeordnet sind. Die Kühlformen 2 weisen - in Gebrauchslage oben - jeweils eine stirnseitige obere Öffnung 3 und eine - in Gebrauchslage unten - stirnseitige untere Öffnung 4 auf, die in Fig. 1b ersichtlich ist. An einem unteren Ende 7 der Kühlformen 2 sind diese an einem Basiselement 8, hier ausgeführt als Basisplatte, verschweißt. Das Basiselement 8 besitzt entsprechend den Durchführungen 6 matrixartig angeordnete Aussparungen 9, deren Form der unteren Öffnung 4 der Kühlformen entspricht, sodass die Kühlformen 2 durch die Aussparungen 9 zugänglich sind.

Ein oberes Ende der Kühlformen 2 ragt jeweils aus der Wanne 5 heraus. Das obere Ende umfasst einen Kopfabschnitt 16, der nachstehend näher beschrieben wird.

Die Wanne 5 und die Basisplatte 8 sind mit Rahmenelementen 23 starr miteinander verbunden (z.B. verschraubt und/oder verschweißt). Die Rahmenelemente 23 sind mit Querträgern 23a gekoppelt (z.B. verschraubt und/oder verschweißt), die an dem Basiselement 8 befestigt (z.B. verschraubt und/oder verschweißt) oder einstückig mit diesem ausgebildet sind.

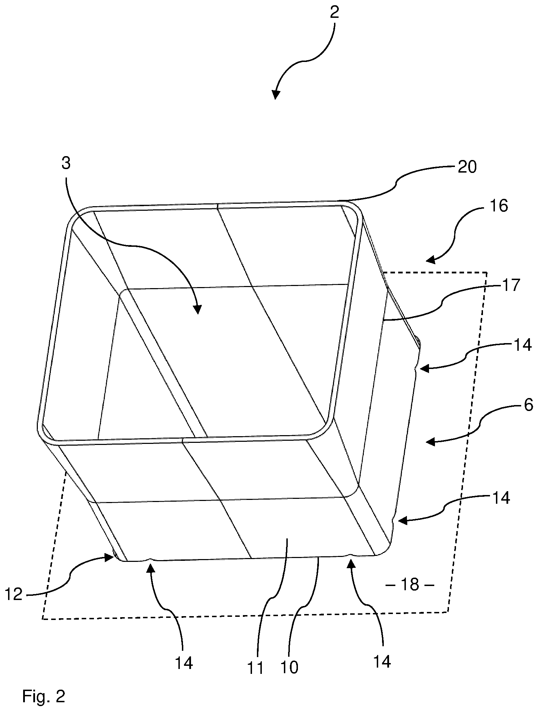

Zur Kühlung der matrixartig angeordneten Formen 2 wird die Wanne 5 mit Wasser (oder einer anderen Kühlflüssigkeit) beaufschlagt. Dabei wird angestrebt, dass sich ein gewisser Wasserspiegel einstellt. Das Wasser strömt aus der Wanne 5 (zu sehen ist in Fig. 2 nur ein Teil eines Bodens 18 der Wanne ) durch einen in Fig. 2 ersichtlichen Spalt 12 zwischen einer Außenwand 11 der Kühlform 2 und einem Rand 10 der Durchführung 6 hindurch und flächig an der Außenwand 11 der Kühlform 2 nach unten, bis sie auf das Basiselement 8 trifft. Von dort läuft das Wasser über Ränder des Basiselements 8 ab, unter anderem durch Ablauföffnungen 24, die in den Querträgern 23a vorgesehen sind.

Typischerweise umfasst eine Kühlformeinheit 1 vierundzwanzig Kühlformen 2 und hat eine Länge von mehr als 1 m (z.B. etwa 1,3 m) und eine Breite von 0,5 m bis 1 m (z.B. etwa 0,6 m). Eine Kühlform hat typischerweise eine Höhe zwischen 0,05 m und 1,2 m, bevorzugt 0,3 m bis 0,5 m. Es versteht sich, dass die Maße bedarfsgerecht gewählt werden können.

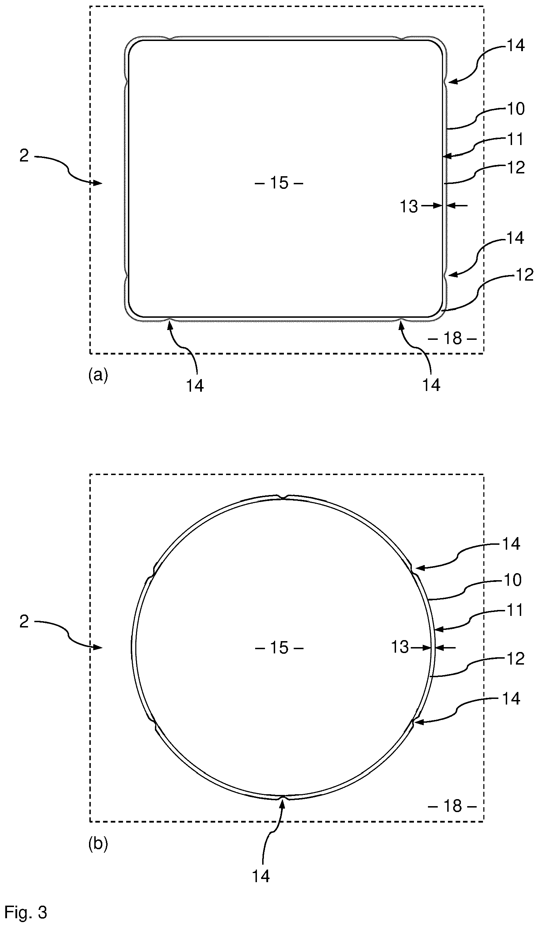

In Fig. 2 sind der in Fig. 1a ausgewiesene Kopfabschnitt 16 und der dort nicht ersichtliche Spalt 12 genauer dargestellt. Der Kopfabschnitt 16 der Kühlform 2 ragt durch die Durchführung 6 des Bodens 18 der Wanne 5. Ein Bereich des Bodens 18 um die Durchführung 6 ist hier durch die gestrichelte Linie angedeutet. In die Durchführung 6 erstrecken sich als Vorsprünge der Wanne 5 ausgebildete Abstandshalter 14, die eine Spaltbreite 13 (siehe Fig. 3) vorgeben. Die Abstandshalter/Vorsprünge 14 definieren also den Spalt 12, dessen Breite 13 in Umfangsrichtung im Wesentlichen konstant ist. Lediglich an den Abstandshaltern 14 berühren sich die Wanne 5 und die Kühlformen 2. Die Vorsprünge 14 sind nicht fest mit der Kühlform 11 verbunden, um (geringfügige) relative Bewegungen zuzulassen, die beispielsweise aufgrund thermischer Effekte auftreten. Beispielsweise wird ein Verzug vermieden, der sonst aufgrund von großem Wärmeeintrag bei einem Schweißprozess bei der Herstellung der Kühlformeinheit 1 auftreten könnte.

Der Spalt 12 ist insbesondere an der linken unteren Ecke der Durchführung 6 ersichtlich.

Der Kopfabschnitt 16 weist einen unteren Rand 17 und einen oberen Rand 20 auf, zwischen denen er sich trichterförmig aufweitet.

Fig. 3a und 3b zeigen schematisch Draufsichten auf einen Ausschnitt einer Kühlformeinheit 1 mit dem Boden 18 der Wanne 5 und eine durch die Durchführung 6 der Wanne 5 ragende Kühlform 2, wobei der Boden 18 durch die gestrichelte Linie angedeutet ist. Die Kühlform 2 der Fig. 3a weist einen rechteckigen Querschnitt 15 auf und die Kühlform 2 der Fig. 3b weist einen kreisförmigen Querschnitt 15 auf. Andere Querschnittsformen sind denkbar.

Der Spalt 12 wird, wie bereits beschrieben, jeweils zwischen der Außenwand 11 der Kühlform 2 und dem Rand 10 der Durchführung 6 der Wanne 5 gebildet. Die Abstandshalter 14 sind in Umfangsrichtung des Spalts 12 regelmäßig verteilt angeordnet und als Vorsprünge des Wannenbodens 18 ausgebildet.

Die Spaltbreite 13 der Spalte 12 ist im Wesentlichen konstant über den Umfang der Kühlform 2. Die Abstandshalter 14 können auch als Rippe und/oder separates Bauteil ausgeführt sein.

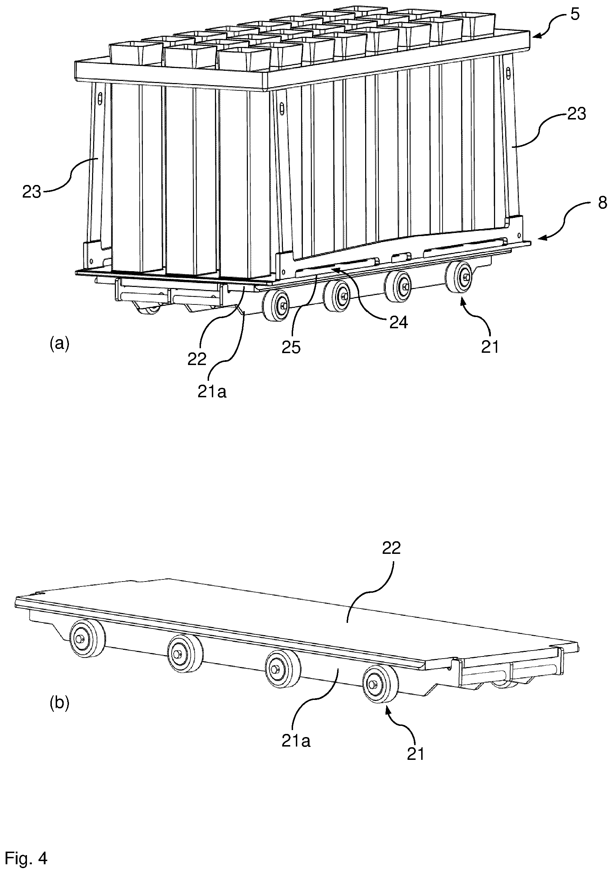

In Fig. 4a ist eine Kühlformeinheit 1 mit einer Ablageeinheit 22 gezeigt, auf der das Basiselement 8 aufliegt. Die Ablageeinheit 22 ist hier als Platte ausgeführt und mit Rollen 21 versehen, sodass die Einheit 1 verfahren werden kann. Die Rollen 21 sind an einem Fahrgestell 21a (in der Regel im Wesentlichen aus Edelstahl) angeordnet, das lösbar mit der Platte 22 verbunden ist, um eine separate Reinigung zu ermöglichen.

Die Ablageeinheit 22 ist in Fig. 4b separat dargestellt. Die Kühlformen 2 werden von unten befüllt und dann auf die die Ablageeinheit 22 aufgeschoben, sodass aus den unteren Öffnungen 4 der Kühlformen 2 herausragende Käsemasse abgeschert wird.

Die Ablageeinheit 22 ist beispielsweise eine Kunststoffplatte mit einem geringen Gleitreibungskoeffizienten, um das seitliche Aufschieben der Kühlformen 2 zu erleichtern. Sie kann aber auch eine beschichtete Edelstahlplatte umfassen, wobei die Beschichtung so aufgebracht ist, dass ein Edelstahl-Edelstahl-Kontakt mit dem Fahrgestell 21a vermieden wird, der zu Kratzern o.ä. führen könnte, die schwer zu reinigen sind und/oder die ein Einfallstor für Korrosion bilden.

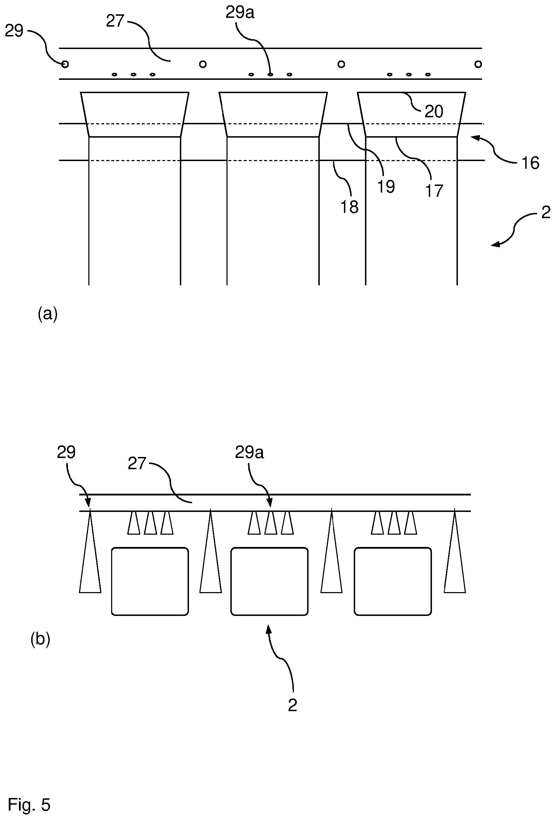

In Fig. 5a ist schematisch eine Seitenansicht eines Ausschnitts einer erfindungsgemäßen Kühleinrichtung gezeigt. Oberhalb des oberen Rands 20 des Kopfabschnitts 16 der Kühlformen 2 einer Kühlformeinheit 1 befindet sich ein Rohr 27 zum Beaufschlagen der Kühlformeinheit 1 mit Wasser. Das Rohr 27 weist eine erste Gruppe von Löchern 29 und eine zweite Gruppe von Löchern 29a auf, die unterschiedlich dimensioniert und in Bezug auf eine Umfangsrichtung des Rohres 27 in unterschiedlichen Winkellagen angeordnet sind. Ferner sind die Gruppen von Löchern 29, 29a regelmäßig angeordnet. Die horizontale Positionierung der zweiten Gruppe von Löchern 29a stimmt mit der horizontalen Positionierung der Kühlformen 2 der Kühlformeinheit 1 überein, wenn sich diese in einer diskreten Kühlposition befindet. Die erste Gruppe von Löchern 29 sind derart positioniert, dass aus ihnen austretendes Wasser in Räume zwischen die Kühlformen 2 gelangt.

Wie bereits beschrieben, weisen die Kühlformen 2 einen Kopfbereich 16 auf, der über dem Boden 18 der Wanne hinausragt. Der unterer Rand 17 des Kopfbereichs 16 befindet sich zwischen dem Boden 18 und einem oberen Rand 19 der Wanne 5. Der obere Rand 20 des Kopfbereichs 16 befindet sich auf einer Höhe zwischen dem oberen Rand 19 der Wanne 5 und dem Rohr 27.

Die Beaufschlagung der Wanne 5 der Kühlformeinheit 1 mit Wasser erfolgt wie in Fig. 5b gezeigt. Die aus den Löchern 29, 29a austretenden Wasserstrahlen sind schematisch als Kegel angedeutet. Das Wasser tritt derart durch die Löcher 29, 29a aus, dass die Löcher 29 der ersten Gruppe den Boden 18 der Wanne 5 in Längsrichtung zwischen den Kühlformen 2 beaufschlagen und die Löcher 29a der zweiten Gruppe den Boden 18 in einem Bereich seitlich der Kühlformen 2 beaufschlagen. Durch die Löcher 29 wird nicht nur ein Randbereich des Bodens 18 mit Kühlflüssigkeit beaufschlagt, sondern auch einem zentralen Bereich Kühlwasser zugeführt, sodass allen Spalten 12 hinreichend viel Wasser zugeführt werden kann.

Die Gruppen von Löchern 29, 29a können aber auch mehr oder weniger Löcher aufweisen als dargestellt und auch in anderen Winkellagen positioniert sein. Beispielsweise weist die erste Gruppe von Löchern 29 einen Durchmesser von 6 mm und die zweite Gruppe von Löchern 29a einen Durchmesser von 3.5 mm auf. Die Anordnung der Löcher 29, 29a stellt sicher, dass kein Kühlwasser durch die Öffnung 3 in die Kühlformen 2 gelangt. Um dies auch bei einem Verschieben der Einheit 1 von einer diskreten Position zur nächsten sicherzustellen, kann die Zufuhr von Kühlwasser währenddessen unterbrochen oder gedrosselt werden.

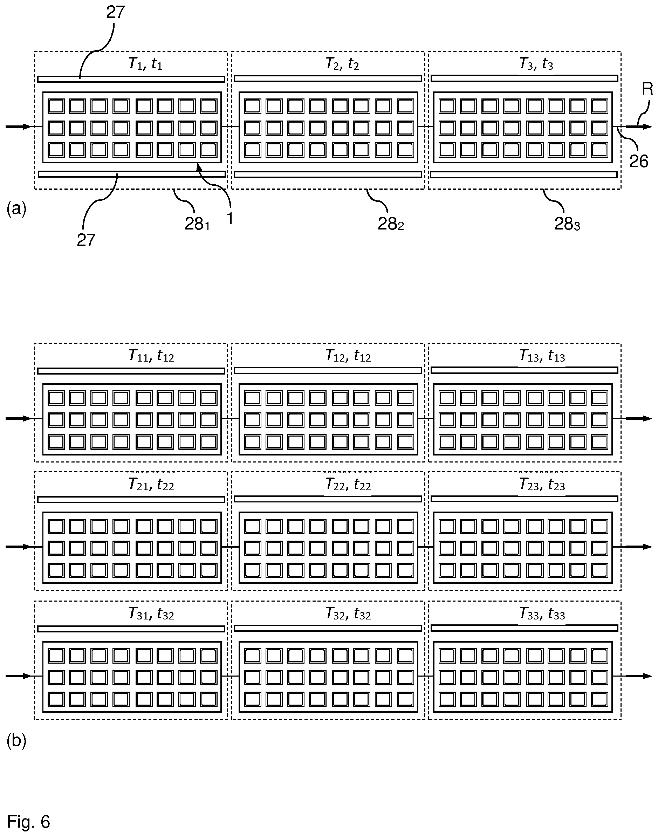

In Fig. 6a ist schematisch eine Kühlstrecke 26 einer erfindungsgemäßen Kühleinrichtung in einer Draufsicht gezeigt. Die Kühlstrecke 26 weist in Transportrichtung R hintereinander angeordnete Kühlabschnitte 28₁, 28₂ und 28₃ auf. Die Anzahl der Kühlabschnitte orientiert sich am konkreten Bedarf. Die zu kühlenden Einheiten 1 werden nach einem vorbestimmen Zeitintervall in den nächsten Kühlabschnitt verfahren. Es erfolgte also eine getaktete Kühlung, im Laufe welcher die Einheiten 1 jeweils mehrere diskrete Kühlpositionen einnehmen.

Jeder Kühlabschnitt 28₁, 28₂, 28₃ umfasst zwei parallele Rohre 27 zur Beaufschlagung der Kühlformeinheit 1 mit Wasser. Die Rohre 27 sind beidseitig der Kühleinheiten 1 angeordnet, um diese auch von beiden Seiten mit Wasser beaufschlagen zu können. Das Wasser hat in jedem Abschnitt eine unterschiedliche Temperatur (*T*₁, *T*₂ und *T*₃). Die Kühlformeinheit 1 kann in jedem Bereich mit einer unterschiedlichen Temperatur beaufschlagt werden, sodass der zeitliche Temperaturverlauf eines Käseformlings in einer Kühlform 2 mittels der Wahl der Temperatur des Kühlwassers gezielt beeinflusst werden kann.

In Fig. 6b sind schematisch drei parallel verlaufende Kühlstrecken 26 einer erfindungsgemäßen Kühleinrichtung 30 gezeigt. Die parallel verlaufenden Kühlstrecken 26 weisen jeweils drei Kühlabschnitte auf. Diese rein beispielhafte Konfiguration macht deutlich, dass die Kühleinrichtung durch eine Anpassung der Anzahl der Kühlstrecken 26 auf einfache Weise skaliert werden kann, um einen gewünschten Durchsatz zu erzeugen. Abweichend von der in Fig. 6a gezeigten Ausführungsform ist jeder Kühlstrecke 26 jeweils nur ein Rohr 27 zugeordnet. Es versteht sich aber, dass bei der Kühleinrichtung 30 der Fig. 6b eine beidseitige Wasserbeaufschlagung gemäß Fig. 6a vorgesehen sein kann, d.h. jede Kühlstrecke 26 weist beidseitig der Kühleinheiten 1 Kühlrohre 27 auf. Eine beidseitige Wasserbeaufschlagung kann auch erreicht werden, wenn benachbarten Kühlstrecken 26 jeweils gemeinsame Kühlrohre 27 zugeordnet sind, die nebeneinander angeordnete Kühleinheiten 1 mit Wasser versorgen.

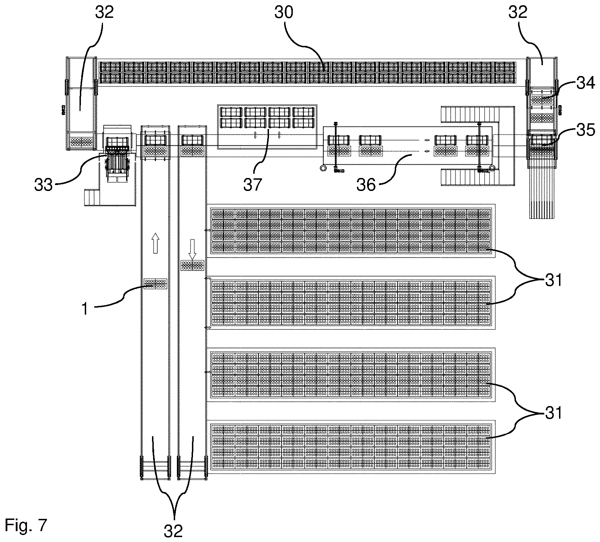

In Fig. 7 ist eine Kühlanlage mit einer erfindungsgemäßen Kühleinrichtung 30 und Kühlformeinheiten 1 gezeigt. Die Kühlanlage umfasst mehrere Pufferlager 31 zum Lagern der Kühlformeinheiten 1, eine Einformeinrichtung 33 zum Einformen von Käsemasse in die Kühlformen 2 der Kühlformeinheiten 1, eine Kühleinrichtung 30 zum Kühlen eingeformter Käseformlinge, eine Heizeinrichtung 34 zur kurzen Beaufschlagung der Kühlformen 2 mit heißer Flüssigkeit, insbesondere Wasser, oder Dampf, insbesondere Wasserdampf, um eine äußerste Schicht der Käseformlinge anzuschmelzen und ein anschließendes Ausformen zu erleichtern, eine Ausformeinrichtung 35 zum Ausformen der Käseformlinge, eine Reinigungseinrichtung 36 zum Reinigen leerer Kühlformeinheiten 1 und eine Lagereinrichtung 37 zum Lagern der Ablageeinheiten 22. Transporteinrichtungen 32 dienen zum Transport der Kühlformeinheiten 1 zwischen den einzelnen Stationen der Anlage.

Eine leere Kühlformeinheit 1 wird aus einer der Lagereinrichtungen 31 durch die Transporteinrichtung 32 zur Einformeinrichtung 33 transportiert, wo Käsemasse in die Kühlformen 2 der Kühlformeinheit 1 eingebracht wird. Danach wird die befüllte Kühlformeinheit 1 zur Kühleinrichtung 30 transportiert und dort einer von gegebenenfalls mehreren Kühlstrecken 26 zugeführt. Die Kühlstrecke 26 kann aus einem oder mehreren Kühlabschnitten 28 bestehen. Die Beaufschlagung der befüllten Kühlformeinheit 1 mit Kühlwasser kann in der vorstehend beschriebenen Weise erfolgen.

Die typischerweise angestrebte Kerntemperatur der Käseformlinge nach dem Kühlen beträgt etwa 35 °C bis 55 °C. Die Kühlzeit hängt unter anderem von der Größe der Käseformlinge ab und beträgt typischerweise zwischen 20 min und 90 min, insbesondere 25 min bis 40 min, bevorzugt 25 min bis 40 min.

Nach dem Kühlprozess wird die Kühlformeinheit 1 mittels einer Transporteinrichtung 32 der optionalen Heizeinrichtung 34 zugeführt, wo die Kühlformeinheit 1 kurzzeitig mit heißer Flüssigkeit und/oder heißem Gas und/oder heißem Dampf beaufschlagt wird. Dadurch schmilzt die radial äußerste Schicht der Käseformlinge, wodurch diese anschließend leichter ausgeformt werden können. Das kurzzeitige Erhitzen der Formlinge verleiht ihnen überdies eine glatte Oberfläche (eine Eigenschaft, die von den Kunden positiv aufgenommen wird). Die heißen Fluide weisen typischerweise Temperaturen von 55 °C bis 95 °C auf, bevorzugt 65 °C bis 75 °C. Die Beaufschlagung dauert typischerweise nur 2 s bis 20 s, bevorzugt 5 s bis 15 s, da bei zur langer Aufheizung die Gefahr besteht, dass die Käseformlinge wieder zu weich oder klebrig werden.

In der daran anschließenden Ausformeinrichtung 35 wird die Ablageeinheit 22 unter der Kühlformeinheit 1 entfernt. Mittels nicht gezeigter Stempel, die von oben in die Kühlformen 2 eingeführt werden, werden die Käseformlinge aus den Kühlformen 2 geschoben und einer hier nicht bezeichneten Fördereinrichtung zugeführt. Die Fördereinrichtung kann beispielsweise ein Förderband oder ein Schwemmkanal sein.

Nach dem Ausformen können die Käseformlinge beispielsweise erneut gekühlt werden, insbesondere in Salzbädern. Es kann auch vorgesehen sein, die Formlinge zu räuchern oder in anderer Form zu behandeln, bevor sie verpackt werden.

Die leere Kühlformeinheit 1 und die Ablageeinheit 22 werden in der Reinigungseinrichtung 36 gereinigt. Die Kühlformeinheit 1 wird dazu aus der Gebrauchslage gekippt, beispielsweise um 170 Grad bis 180 Grad gedreht, um deren Wanne 5 schnell zu entleeren und eine Verschleppung von Reinigungsmittel zu verhindern. Die gereinigte Kühlformeinheit 1 kann anschließend durch die Transporteinrichtung 32 der Lagereinrichtung 31 zugeführt oder gleich erneut befüllt werden.

Die Kühlformeinheit 1wird somit einem kontinuierlichen Kreislauf zugeführt, in dem eingeformt, gekühlt und ausgeformt wird. Die Reinigung der leeren Kühlformeinheiten 1 ist ebenfalls Bestandteil dieses kontinuierlichen Kreislaufs. Die Kühleinrichtung und/oder Transportstrecken für die Kühlformeinheiten 1 des Kreislaufs sind bevorzugt so ausgebildet, dass zu deren Reinigung alle Kühlformeinheiten heraustransportiert bzw. herausgefahren werden können. Die mehreren Lagereinrichtungen 31 können für Kühlformeinheiten 1 mit unterschiedlichen Kühlformen 2 ("Formate") genutzt werden. Für einen Formatwechsel wird einfach auf einen anderen Satz von Kühlformeinheiten 1, die in den Einrichtungen 31 vorgehalten werden, zurückgegriffen. Es sind eventuell lediglich geringfügige Modifikationen an der Einformeinrichtung 33 erforderlich (siehe unten). Bleiben die Außenmaße der Kühlformeinheiten 1 gleich, müssen bei geeigneter Anordnung der Löcher 29, 29a bei einem Formatwechsel keine Modifikationen vorgesehen werden. Es kann auch vorgehsehen sein, dass verschiedene Gruppen von Löchern 29, 29a vorhanden sind, die formatspezifisch geschlossen, geöffnet und/oder gedrosselt werden. Es ist auch möglich formatspezifische Rohre 27 mit geeigneten Löchern 29, 29a vorzuhalten, die bei einem Formatwechsel eingesetzt werden.

Es können auch Kühlformeinheiten 1 mit jeweils unterschiedlichen Kühlformen 2 gleichzeitig in der Kühlanlage 30 gekühlt werden.

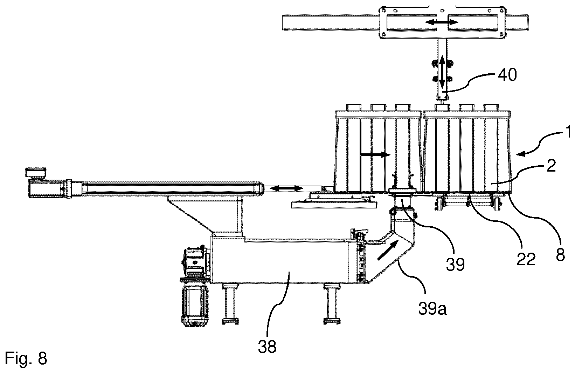

In Fig. 8 ist schematisch ein Ausschnitt der Einformeinrichtung 33 in einer Seitenansicht gezeigt. Die Einformeinrichtung 33 umfasst eine Fördereinrichtung 38, insbesondere einen Schneckenförderer, zum Einbringen von Käsemasse in die in einer Matrix angeordneten Kühlformen 2 der Kühlformeinheit 1. Die Masse wird "spaltenweise" von unten in die Kühlformen 2 eingepresst, in denen horizontal und vertikal verfahrbare Stempel 40 angeordnet sind. Die Stempel 40 üben bei dem Einbringen der Käsemasse eine geeignete Gegenkraft aus, die zu einer gleichmäßigen Einformung der Käsemasse beiträgt und die Bildung von Lufteinschlüssen weitgehend unterdrückt. Die Käsemasse wird typischerweise mit einer Temperatur zwischen 55 °C und 65 °C eingeformt.

Eine leere Kühlformeinheit 1 wird von links über eine senkrecht zur Bildebene hintereinander liegende Reihe von Stutzen 39, die an Austragsabschnitten 39a einer oder mehrerer Fördereinrichtung 38 angeordnet sind, geschoben, sodass Öffnungen der Stutzens 39 mit einer Reihe hintereinander liegender Aussparungen 9 des Basiselements 8 fluchten. Eine Reihe senkrecht zur Bildebene hintereinander liegender Stempel 40 wird von oben in die zu befüllende Reihe Kühlformen 2 bis zu deren unteren Ende 7 eingeführt. Die Fördereinrichtung 38 drückt daraufhin Käsemasse von unten in die Kühlformen 2, während die Stempel 40 von oben eine Gegenkraft auf die Käsemassen ausüben. Die Fördereinrichtung 38 fördert die Käsemasse, bis die Stempel 40 an einem nicht gezeigten Anschlag anschlagen. Das Anschlagen wird detektiert und dann ein Signal an die Fördereinrichtung 38 gesendet, so dass das Fördern der Käsemasse einstellt wird. Mit dem Stempel 40 am eben erwähnten Anschlag wird anschließend die Kühlformeinheit 1 weiter nach rechts verschoben, bis die nächste Reihe von Kühlformen 2 an den Stutzen 39 der Fördervorrichtung 38 anliegt (in Fig. 8 gezeigter Zustand). Erst danach werden die Stempel 40 aus den gerade befüllten Kühlformen 2 herausgezogen und in die nächste Reihe Kühlformen 2 über den Stutzen 39 eingefahren, um ebendiese Reihe von Kühlformen 2 zu befüllen. Das heißt während dem seitlichen Verschieben der Kühlformeinheit 1 verbleiben die Stempel 40 in den Kühlformen 2. Diese Maßnahme sorgt dafür, dass die Formlinge bei dem Vorschub stabilisiert werden.

Durch das Schieben der Kühlformeinheit 1 auf die Ablageeinheit 22 wird aus der Kühlform 2 nach unten herausragende Käsemasse abgeschert. Sobald die letzte Reihe der Kühlformen 2 einer Kühlformeinheit 1 gefüllt und diese auf die Ablageeinheit 22 geschoben wurde, wird die Kühlformeinheit 1 samt Ablageeinheit 22 durch die Fördereinrichtung 32 der Kühleinrichtung 30 zugeführt. Zum Weiterschieben einer zu befüllenden bzw. befüllten Kühlformeinheit 1 kann optional eine angrenzende Kühlformeinheit 1 genutzt werden.

Bei einem Formatwechsel müssen lediglich die Stutzen 39 ausgetauscht werden. Es können auch blendenartige Austauschteile vorgesehen sein, die einen Querschnitt eines ausgangsseitigen Endes der Austragsabschnitte 39a der Fördervorrichtung 38 an den Querschnitt der gerade eingesetzten Kühlformen 2 anpasst.

Zusammenfassend lässt sich festhalten, dass die erfindungsgemäße Kühlformeinheit eine gleichmäßige und effiziente Kühlung ermöglicht, sodass der Kühlwasser- und damit auch der Energieverbrauch einer entsprechenden Anlage reduziert wird. Die Einheit und die erfindungsgemäße Kühleinrichtung ermöglichen einen kontinuierlichen Betrieb, bei dem auch die Kontamination der Käseformlinge mit Kühlwasser vermieden wird. Die Kühlformeinheiten lassen sich auch auf einfache Weise nach jedem Kühlzyklus reinigen.

Die erfindungsgemäße Kühlformeinheit und die die erfindungsgemäße Kühleinrichtung ermöglichen außerdem einen vergleichsweise einfachen und schnellen Formatwechsel. Zudem ist es möglich, die Kühlzeiten an die jeweils vorliegenden Anforderungen anzupassen und geeignete Kühlprofile zu "fahren".

Es versteht sich, dass die erfindungsgemäße Kühlformeinheit auch in Kühleinrichtungen zum Einsatz gelangen kann, die keine geradlinig translatorischen Kühlstrecken aufweisen. Grundsätzlich können sie auch bei karussellartigen Kühleinrichtungen verwendet werden.

### Bezugszeichenliste

- 1: Kühlformeinheit
- 2: Kühlform
- 3: stirnseitige, obere Öffnung der Kühlform
- 4: stirnseitige, untere Öffnung der Kühlform
- 5: Wanne
- 6: Durchführung
- 7: unteres Ende der Kühlform
- 8: Basiselement, Platte
- 9: Aussparung
- 10: Rand der Durchführung
- 11: Außenwand
- 12: Spalt
- 13: Spaltbreite
- 14: Abstandshalter / Vorsprung
- 15: Querschnitt der Kühlform
- 16: Kopfabschnitt der Kühlform
- 17: unterer Rand des Kopfabschnitts
- 18: Boden der Wanne
- 19: oberer Rand der Wanne
- 20: oberer Rand des Kopfabschnitts
- 21: Rollen
- 21a: Fahrgestell
- 22: Ablageeinheit
- 23: Rahmenelement
- 23a: Querträger
- 24: Ablauföffnungen
- 25: Rand des Basiselements
- 26: Kühlstrecke
- 27: Rohr
- 28: Kühlabschnitt
- 29, 29a: erste und zweite Gruppe von Löchern
- 30: Kühleinrichtung
- 31: Lagereinrichtung für Kühlformeinheiten
- 32: Transporteinrichtung
- 33: Einformeinrichtung
- 34: Heizeinrichtung
- 35: Ausformeinrichtung
- 36: Reinigungseinrichtung
- 37: Lagereinrichtung für Ablageeinheiten
- 38: Fördervorrichtung für Käsemasse
- 39: Stutzen
- 39a: Austragsabschnitt
- 40: Stempel

## Patentansprüche

1. Kühlformeinheit (1) zum Kühlen von Käseformlingen mittels einer Kühlflüssigkeit, insbesondere Wasser, umfassend:
zumindest eine mit Käsemasse befüllbare Kühlform (2), insbesondere rohrförmige Kühlform, mit - in Gebrauchslage - einer stirnseitigen oberen Öffnung (3) und mit einer stirnseitigen unteren Öffnung (4),
zumindest eine Wanne (5) mit zumindest einer Durchführung (6) zur Aufnahme der Kühlform (2) und
ein mit einem unteren Ende (7) der Kühlform (2) verbundenes Basiselement (8), insbesondere eine Basisplatte, mit zumindest einer Aussparung (9), die der unteren Öffnung (4) zugeordnet ist und durch die die untere Öffnung (4) zugänglich ist,
wobei die Kühlform (2) in der Durchführung (6) angeordnet ist und
wobei die Durchführung (6) derart dimensioniert ist, dass zwischen einem Rand (10) der Durchführung (6) und einer Außenwand (11) der Kühlform (2) ein zumindest abschnittsweise umlaufender Spalt (12) gebildet ist.

2. Kühlformeinheit nach Anspruch 1,
wobei im Spalt (12) zwischen Kühlform (2) und Wanne (5) zumindest ein eine Spaltbreite (13) vorgebender Abstandshalter (14) vorgesehen ist, der lösbar und/oder fest an Kühlform (2) und/oder Wanne (5) angeordnet ist, insbesondere wobei der Abstandshalter (14) als Rippe, Vorsprung und/oder separates Bauteil ausgeführt ist, insbesondere wobei mehrere Abstandshalter (14) vorgesehen sind, die in Umfangsrichtung des Spaltes (12) verteilt angeordnet sind, insbesondere regelmäßig verteilt.

3. Kühlformeinheit nach einem der vorhergehenden Ansprüche,
wobei der Spalt (12) eine Spaltbreite (13) von 0,4 mm bis 1,2 mm aufweist, insbesondere eine Spaltbreite von 0,5 mm bis 1,0 mm, bevorzugt eine Spaltbreite von 0,7 mm bis 0,9 mm.

4. Kühlformeinheit nach einem der vorhergehenden Ansprüche,
wobei eine Breite des Spalts (12) im Wesentlichen konstant ist.

5. Kühlformeinheit nach einem der vorhergehenden Ansprüche,
wobei die Kühlform (2) zumindest abschnittsweise einen polygonalen, kreisförmigen, quadratischen oder rechteckigen Querschnitt (15) aufweist.

6. Kühlformeinheit nach einem der vorhergehenden Ansprüche,
wobei die Kühlform (2) einen Kopfabschnitt (16) aufweist, der die obere Öffnung (3) umfasst und der zu der oberen Öffnung (3) hin trichterförmig aufgeweitet ist.

7. Kühlformeinheit nach einem der vorhergehenden Ansprüche,
wobei ein unterer Rand (17) des Kopfabschnitts (16) auf einer Höhe zwischen einem Boden (18) der Wanne (5) und einem oberen Rand (19) der Wanne (5) angeordnet ist und/oder
wobei ein oberer Rand (20) des Kopfabschnitts (16) über den oberen Rand (19) der Wanne (5) hinaus ragt.

8. Kühlformeinheit nach einem der vorhergehenden Ansprüche,
wobei die Kühlformeinheit (1) eine Mehrzahl von Durchführungen (6) und Kühlformen (2) aufweist, die bevorzugt regelmäßig angeordnet sind, insbesondere in Form einer Matrix.

9. Kühlformeinheit nach einem der vorhergehenden Ansprüche,
wobei eine mit Rollen (21) oder Kufen versehene Ablageeinheit (22) vorgesehen ist, insbesondere eine Platte, auf der das Basiselement (8) lösbar anordbar ist.

10. Kühlformeinheit nach einem der vorhergehenden Ansprüche,
wobei die Wanne (5) und das Basiselement (6) mittels zumindest eines Rahmenelements (23) fest miteinander verbunden sind.

11. Kühlformeinheit nach einem der vorhergehenden Ansprüche,
wobei das Basiselement (6) Ablauföffnungen (24) aufweist, durch die die Kühlflüssigkeit über einen Rand (25) des Basiselements (6) ablaufen kann.

12. Kühleinrichtung zum Kühlen von Käseformlingen mittels einer Kühlflüssigkeit, insbesondere Wasser, umfassend:
zumindest eine Kühlformeinheit, die mit einer Käsemasse befüllbar ist, insbesondere Kühlformeinheit gemäß einem der vorstehenden Ansprüche,
zumindest eine geradlinige Kühlstrecke (26), entlang der die zumindest eine Kühlformeinheit verfahrbar ist, wobei die Kühlformeinheit entlang der Kühlstrecke (26) zumindest abschnittsweise mit Kühlflüssigkeit beaufschlagbar ist.

13. Kühleinrichtung (30) nach Anspruch 12,
wobei zumindest ein Rohr (27) zum Beaufschlagen der Kühlformeinheit mit der Kühlflüssigkeit vorgesehen ist, das sich zumindest abschnittsweise entlang der Kühlstrecke (26) erstreckt, insbesondere parallel versetzt zu einer Längsachse der Kühlstrecke (26), insbesondere wobei das Rohr (27) oberhalb eines oberen Rands (19) der Wanne (5) angeordnet ist, und/oder wobei beidseitig der Kühlstrecke (26) jeweils zumindest ein Rohr (27) vorgesehen ist.

14. Kühleinrichtung nach Anspruch 13,
wobei das Rohr (27) zum Beaufschlagen der Kühlformeinheit mit Kühlflüssigkeit eine Mehrzahl von Löchern (29) aufweist, insbesondere wobei die Löcher (29) regelmäßig angeordnet sind, insbesondere wobei eine erste Gruppe (29) und eine zweite Gruppe (29a) von Löchern vorgesehen sind, die unterschiedlich dimensioniert und/oder in Bezug auf eine Umfangsrichtung des Rohrs (27) in unterschiedlichen Winkellagen angeordnet sind.

15. Kühleinrichtung nach einem der Ansprüche 12 bis 14,
wobei zumindest zwei in Längsrichtung (R) der Kühlstrecke (26) hintereinander angeordnete Kühlabschnitte (28₁, 28₂, 28₃) vorgesehen sind, in denen die Kühlformeinheit unterschiedlich stark kühlbar ist, insbesondere mit Kühlflüssigkeit unterschiedlicher Temperatur (*T*₁, *T*₂, *T₃*).
